(19) **Europäisches Patentamt**

**European Patent Office**

**Office européen des brevets**

(11) **EP 1 244 318 B1**

(12) **EUROPEAN PATENT SPECIFICATION**

(45) Date of publication and mention
of the grant of the patent:
**18.05.2005 Bulletin 2005/20**

(51) Int Cl.[7]: **H04Q 7/36**

(21) Application number: **01106848.3**

(22) Date of filing: **19.03.2001**

(54) **Adaptive threshold scheme for differentiated access to system resources**

Adaptives Verfahren zur Schwellwertbestimmung für den verschiedenartigen Zugriff auf Netzressourcen

Méthode adaptative pour la détermination d'un seuil pour accès différencié aux ressources d'un reseau

(84) Designated Contracting States:
**AT BE CH CY DE DK ES FI FR GB GR IE IT LI LU MC NL PT SE TR**

(43) Date of publication of application:
**25.09.2002 Bulletin 2002/39**

(73) Proprietor: **SIEMENS AKTIENGESELLSCHAFT**
**80333 München (DE)**

(72) Inventor: **Kröner, Hans, Dr.**
**73312 Geislingen (DE)**

(56) References cited:
- KIM Y C ET AL: "DYNAMIC CHANNEL RESERVATION BASED ON MOBILITY IN WIRELESS ATM NETWORKS" IEEE COMMUNICATIONS MAGAZINE, IEEE SERVICE CENTER. PISCATAWAY, N.J, US, vol. 37, no. 11, November 1999 (1999-11), pages 47-51, XP000868379 ISSN: 0163-6804
- HUANG T-Y: "Performance analysis of a channel assignment scheme in cellular communication systems" COMPUTER COMMUNICATIONS, ELSEVIER SCIENCE PUBLISHERS BV, AMSTERDAM, NL, vol. 24, no. 7-8, 1 April 2001 (2001-04-01), pages 724-730, XP004233863 ISSN: 0140-3664
- TIAN X ET AL: "QOS PROVISIONING WITH DISTRIBUTED CALL ADMISSION CONTROL IN WIRELESS NETWORKS" ICC '98. 1998 IEEE INTERNATIONAL CONFERENCE ON COMMUNICATIONS. CONFERENCE RECORD. NEW CENTURY COMMUNICATIONS. ATLANTA, GA, JUNE 7 - 11, 1998, IEEE INTERNATIONAL CONFERENCE ON COMMUNICATIONS, NEW YORK, NY: IEEE, US, vol. 2 CONF. 5, 7 June 1998 (1998-06-07), pages 797-801, XP000890982 ISBN: 0-7803-4789-7

EP 1 244 318 B1

**Description**

The invention concerns methods and devices for applying an adaptive threshold scheme for differentiated system access.

Y.C. Kim, D.E. Lee, B.J. Lee, Y.S. Kim, B. Mukherjee, New calls are prohibited from entering the mobile communication system if a certain system occupancy is exceeded, whereas handoff calls may still enter the cell if a channel can be granted. This scheme is used to prioritise handovers (=handoff calls) over new calls ensuring that the call dropping probability experienced by handoffs is smaller than the call blocking probability of new call arrivals.

"Dynamic Channel Reservation Based on Mobility in Wireless ATM Networks" XP-000868379, IEEE Communications Magazine November 1999, pp. 47- 51 [1] discloses methods for handling the granting of channels to new calls and to handoff calls. It explains a GCS guard channel scheme which reserves some "fixed" numbers of guard channels to handoff calls. The threshold is fixed. The publication further describes a DCRS dynamic channel reservation scheme which dedicates guard channels to handoff calls. The threshold is adapted depending on the mobility of calls, the total numbers of channels in a cell, the threshold between normal channels and guard channels and the current number of used channels.

K. W. Ross, "Multiservice Loss Models for Broadband Telecommunications Networks", Springer Verlag, 1995 [2] discloses admission control strategies for multi-service networks: In multi-service networks such as ISDN, ATM or future UMTS networks, which support several services with different bandwidth requirements, if no additional access control is used, e.g., a call with high bandwidth requirements is blocked with a much higher probability than a call with lower bandwidth requirements. Therefore, various schemes have been proposed, which define individual load or bandwidth thresholds for different service classes (in [2] these schemes are called par titioning and threshold policies, respectively) for different service classes offering a fair system access. This can also be used to maximise the revenue of the operator taking into account the tariff structure of the different services.

H. Kröner, G. Hebuterne, P. Boyer, A. Gravey: "Priority Management in ATM Switching Nodes", IEEE Journal on Selected Areas in Communications, vol. 9, no. 3, April 1991, pp. 418-427 [3] discloses buffer access schemes for ATM or IP networks: Packet oriented networks require buffers to cope with the bursty and asynchronous nature of packet data arrivals. But there is still a certain probability that a buffer overflow occurs. In order to provide a differentiation of the loss probability of different service classes, service specific packet dropping thresholds/queue lengths can be defined for different service classes (data connections are able to recover from packet losses by retransmitting packets, whereas voice packets require a strict control of packet loss/throughput and delay).

S. Floyd, V. Jacobsen: "Random Early Detection Gateways for Congestion Avoidance", IEEE/ACM Transactions on Networking, August 1993, pp. 397-413 [4] discloses packet Discard Mechanisms to reduce the offered traffic in IP networks: If a certain buffer filling level is exceeded, the system will start to discard randomly packets in order to shut down the traffic offered by the TCP connections. This scheme, called random early detection, is extensively used in IP networks [4] and requires a minimum threshold where dropping starts and a maximum threshold where the dropping probability jumps to 1.

Currently, fixed thresholds are used to provide the differentiation of system access of different traffic and QoS service classes. However, a common problem for all these mechanisms is the dimensioning of the threshold levels to achieve a certain system behaviour, because the threshold values are highly dependent on the traffic mix and the call/handoff/packet arrival process. Moreover, the traffic mix, the user mobility and the call/handoff/packet arrival process and burstiness depends on various factors such as time of the day and the place/environment (temporal and spatial variations), which makes it very difficult and inefficient to adjust the thresholds in a proper way for all different situations.

It is an object of the invention to improve the system access scheme for new service requests and handover requests efficiently trying to avoid the said problems of known system access schemes as far as possible. This object is achieved by an invention as set forth in the independent claim. Granting access (to network resources) in accordance with the claim wording can comprise granting access to at least one network for a user of a mobile station requesting network access for e.g. a speech call or for transmission of data or for any multimedia service. A threshold may be e. g. a value representing the percentage of capacity (for which access can be granted) or the number of channels or other resources to be granted for requested new services (e.g. new calls)- which means that access to the capacity not granted to new services can be granted to services for which a hand-over is requested. A change-over may be a change-over from one element of a communication network to another element of this communication network (e.g. a hand-over of a mobile station between base stations or adaptive antennas in GSM or CDMA etc) or a change-over from one element of a communication network to another element of an other communication network.

New services according to the claim wording can be any services that are requested and have not started or for which services no or not yet all desired communication capacity has been granted- e.g. a new call. Granted resources or capacity or access to elements may e.g. comprise a time and/or frequency channel (e.g. a speech channel or a data transmission channel in GSM etc) and/ or code schemes for communication (e.g. in CDMA). Access can comprise providing network resources (e.g. network resources represented by frequency and/or time and/or codes) for a mobile station- e.g. a speech channel.

The measured quality of service (= measured QoS level) can be any measured parameter indicating the level of the quality of service, e.g. the probability (measured rate) of blocking hand-over requests (and/ or dropping of calls during hand-over) and /or the probability (measured rate) of blocking requests for access for enabling a new service (e.g. not granting access to a speech channel). The predetermined target quality of service is a level of service that is desired, e.g. the percentage of blocked/ dropped hand-over requests or the percentage of blocked requests for a new service. The threshold value can define a ratio (e.g. percentage) of resources available for hand-over-services and of resources available for new services- e.g. a threshold value of 60% indicating that 60% of the resources (e.g. time/ frequency channels and/or codes) are available for services requesting hand-over and that 40% (=the other resources) are available for requested new services etc.

An adaptive adaptation scheme according to the invention can comprise the adjustment of the threshold values, which is directly based on the quality of service measure that is controlled by the underlying threshold scheme, i.e., this scheme alters the threshold(s) in response to a call/packet loss/delay. The basic scheme can be generally applied to loss as well as queuing systems, controlling loss, delay or throughput of two or more service classes with simple or more sophisticated controlling schemes.

The proposed adaptive threshold scheme according to the invention can provide the following benefits:

- In the long-term it is able to provide exactly a predefined QoS level, which means that the mechanism is able to control directly the QoS parameters irrespectively of the arrival pattern, traffic fluctuations and burstiness. Therefore, the proposed scheme is very robust and is able to cope with various situations. In particular, it is able to dynamically adapt the system behaviour when the traffic composition and intensity varies due to temporal or spatial changes of the user activity.
- The dynamic approach provides superior performance (higher admissible system load), because the thresholds will be dynamically optimised to a particular load situation taking into account the temporal and spatial variations of the traffic intensity and characteristics. A fix threshold scheme has to be dimemsioned according to the worst case thus providing a lower system load (otherwise, the QoS targets will be violated for the worst case scenarios).
- It provides an easy to understand user interface (O&M parameter description), because the user specifies the desired set of QoS parameters instead of the set of threshold values that fit to a certain set of QoS values, i.e., the user has an easy and direct interface to the QoS setting. It avoids expensive traffic engineering tasks for system dimensioning.
- It provides a fast reaction to a QoS degradation, because the value K (see next section) is typically > 1. Therefore, only small deviations from the desired QoS level (e.g., packet loss rate, call loss rate) occur. In particular, the scheme provides smaller variations of the QoS level than a fixed threshold scheme.
- The adaptation scheme is computationally simple, because the algorithm uses only additions/subtractions for the control of the threshold (no multiplications or divisions). Therefore, the scheme is able to adapt the threshold value in real-time, even for a high-speed packet switched network.

Further advantages and details of the invention are set forth in the claims and the following description of an example of the invention.

Figure 1    shows the basic algorithm of an example of the invention.
Figure 2    shows an adaptive guard channel scheme
Figure 3    shows the loss probability of handoff calls
Figure 4    shows the loss probability of new call requests
Figure 5    shows the mean value of the adaptive threshold
Figure 6    shows application of the adaptive threshold scheme to a packet transmission buffer
Figure 7    illustrates the dropping probability of the Random Early Detection scheme

A basic idea behind the invention (i.e. of the Proposed Adaptive Threshold Scheme) is the adaptation of the threshold values in response to the measured quality of service. The basic mechanism that is used for the adaptation of the threshold values can be described as follows. The threshold will be adapted for each event (arrival of a call/ packet, departure of a call/packet) that should be controlled by the threshold according to the following basic rules:

- The threshold will be raised slightly by a value $\Delta$ if the event indicates a better QoS than the target QoS level.
- The threshold will be reduced by a value $K\Delta$ if the event indicates a worse QoS than the target QoS level.

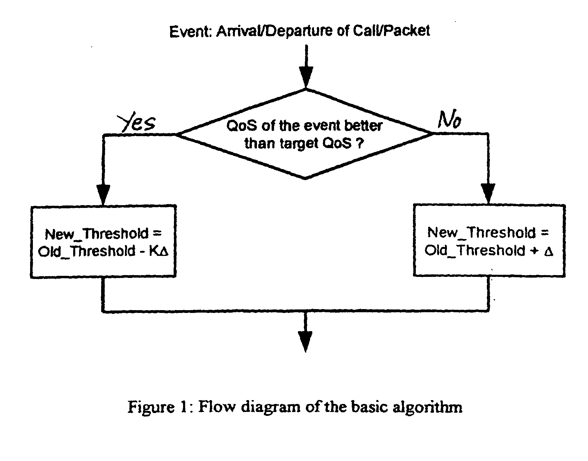

The basic algorithm is illustrated in Figure 1. Furthermore, the value K should be chosen in such a way that a certain QoS level in terms of call/packet loss probability, packet delay quantile, call load or packet throughput can be maintained. This leads to the following balance condition for the derivation of K:

$$\text{Number of events with a QoS better than QoS target} * \Delta = \text{number of events with QoS worse than QoS target} * K\Delta$$

This leads to

$$K = \text{number of events with a QoS better than QoS target} / \text{number of events worse than QoS target.}$$

Exemplary Applications of the proposed Scheme:

Since this algorithm has been defined in a rather abstract way, we will provide a number of concrete examples for an application of the proposed scheme. In general it can be used to restrict the access to a loss system or to a queueing system.

Application to Loss Systems:

Application to the Guard Channel Scheme:

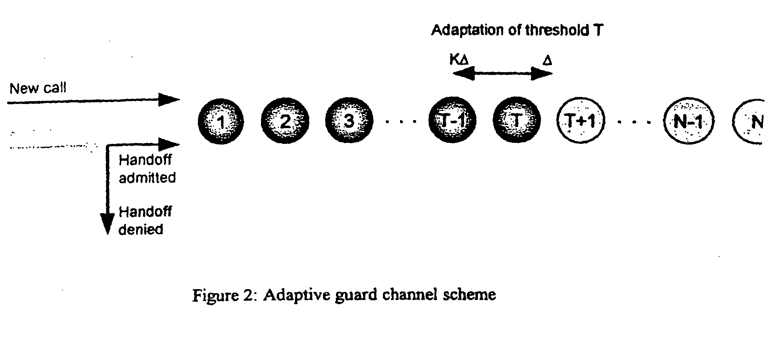

The first example application is the guard channel scheme used in cellular communications. The guard channel scheme reduces the call dropping probability encountered by handoff calls compared to the call blocking probability of new calls by comparing the number of occupied channels with a threshold value T when a new call arrives. The new call will be accepted when less or equal than T channels are occupied, whereas the admission will be denied when more than T channels are occupied. On the other hand, a handoff will be accepted if one of the N channels (N>=T) is available. The threshold value T has to be dimensioned in such a way that the call dropping probability for handoff calls is lower than a certain value $B_d$ (see, e.g., [1]). This can be achieved by the proposed threshold adaptation scheme if the threshold T is increased by a value $\Delta$ if a handoff is admitted into the system (one of the N channels is available), whereas the threshold T is decreased by $K\Delta$ if the handoff has to be denied, because all N channels are occupied. This basic system behaviour is described in Figure 2.

Additionally, it has to be taken into account that the threshold has to be kept between a minimum of 0 and a maximum of N. If the system is not in over- or underload, these maximum and minimum values will not be reached and therefore, the following balance equation is valid:

$$\text{number of denied handoffs} * K\Delta = \text{number of admitted handoffs} * \Delta$$

Furthermore, the dropping probability $B_d$ for handoff calls is given by number of denied handoffs / (number of denied handoffs + number of admitted handoffs) which leads to the following relationship between $B_d$ and K

$$B_d * K * \Delta = (1 - B_d) * \Delta$$

and therefore, to the following dimensioning rule:

$$K = (1 - B_{d,target}) / B_{d,target}. \tag{1}$$

Where $B_{d,target}$ represents the target dropping probability. If the value K is chosen according to Equation (1), it is guaranteed that a long-term blocking probability of $B_d$ will be achieved given that the system is not in overload (T equals 0) or in underload (T equals N).

This system has been simulated with the assumptions that new and handoff calls are generated according to a Poisson process. Furthermore, the call holding time of new and handover calls is negative exponentially distributed.

This model is identically to the model used in [1]. Furthermore, a simple study has been carried out using the basic parameters used in [1] :

- Number of channels N: 60
- Target dropping probability $B_d$: 0.001
- Offered network load: 0.8
- Mobility $\Delta$ of calls (arrival rate of handoffs/arrival rate of new calls) is variable

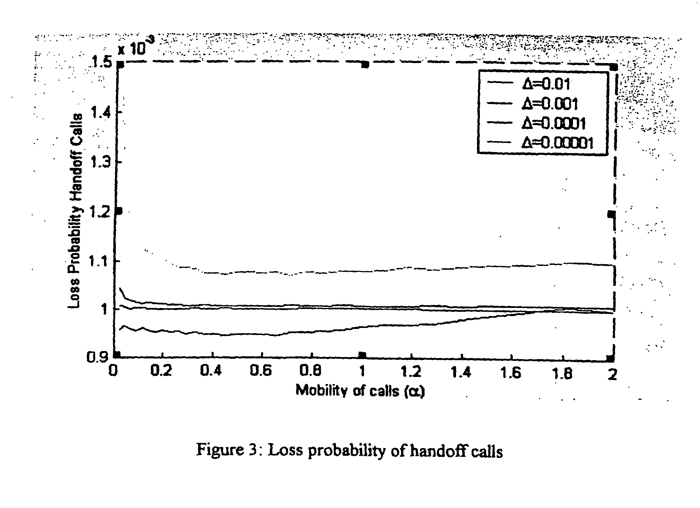

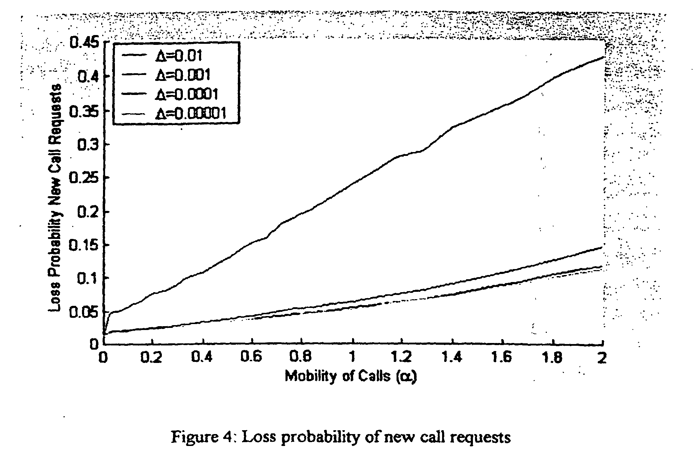

Figures 3 and 4 show the results obtained from the scheme for different values of $\alpha$ (mobility of calls).

The following conclusions can be drawn from the results:

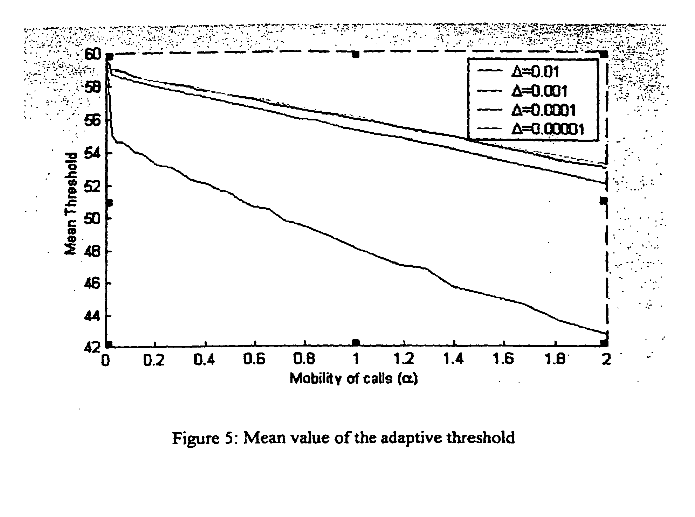

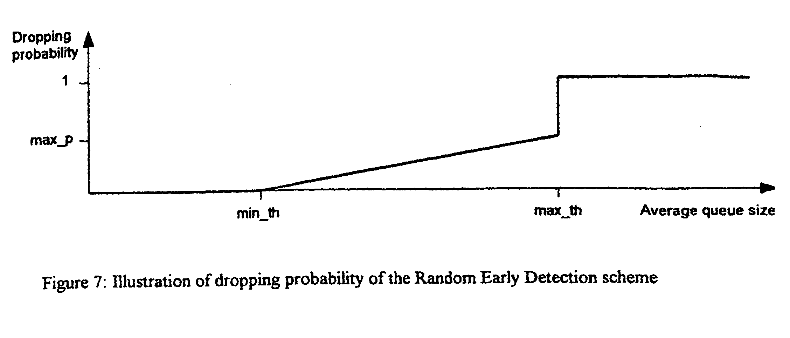

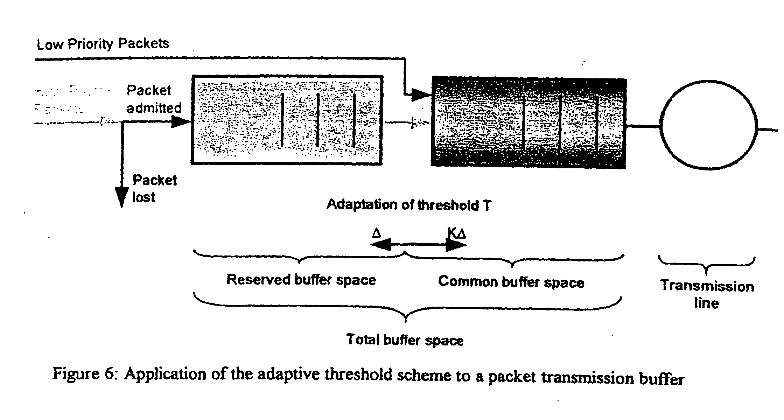

- The proposed scheme guarantees the required loss probability for handoff calls
- The proposed scheme provides superior performance compared to all schemes studied in [1] (see Figures 5 and 6 of the referenced paper)

The adaptation of the threshold can be seen in the following Figure, which depicts the average threshold vs. the mobility parameter $\alpha$.

Furthermore, there have been additional investigations, which confirm that the proposed scheme is able to maintain the desired handoff blocking probability also for varying arrival rates (modelled by a Markov Modulated Poisson Process) leading to a very simple and robust control scheme.

A simple modification of the proposed scheme is the control of the ratio of the call dropping and call blocking probabilities instead of the call dropping probability itself. This can be achieved if the following balance equation is used to design the control algorithm:

$$\text{no. of handoffs lost / no. of handoffs arrived = loss\_ratio *}$$

$$\text{no. of new calls lost / no. of new calls arrived}$$

$$\text{no. of handoffs lost / no. of handoffs arrived } * \Delta =$$

$$\text{loss\_ratio * no. of new calls lost / no. of new calls arrived}$$

$$* \Delta$$

$$\text{no. of handoffs lost * } (\Delta * \text{ no. of new calls arrived / no.}$$

$$\text{of handoffs arrived / loss\_ratio) = no. of new calls lost * } \Delta$$

Therefore, increasing the threshold for each loss of a new call by an amount of $\Delta$ and decreasing the threshold for each loss of a handoff call by a value ($\Delta$ * no. of new calls arrived / no. of handoffs arrived / loss\_ratio) provides the long-term desired loss\_ratio between handoff loss probability (call dropping probability) and new call loss probability (call blocking probability).

Finally, it has to be mentioned that all derivations and descriptions within this section have been derived on the basis of channels to get a clear interpretation. On the other hand, a service may require a certain time slot, a certain bit rate or a certain code resource and in that case, the threshold is also given by a number of time slots, a bit rate or a cnumber of codes and the number of channels describes the number of time slots, the total bit rate of a radio cell or the number of code resources.

Application to Admission Control in Multi Service Loss Networks:

Multi-Service loss networks such as UMTS, ISDN, ATM or IP networks offer a very unfair call admission to services with different resource (bit rate) requirements. For example, if all services have access to the complete pool of resources (this policy is called complete sharing), a service with small resource (bit rate) requirements gets more often access to the system than a service with high resource (bit rate) requirements, i.e., the call loss probability is larger for high bit rate calls than for low bit rate calls. Additionally, this so-called complete sharing policy has the disadvantage that it may lead to a poor resource utilisation and it provides a poor revenue for different service classes with class-dependent revenue [2].

Therefore, within the literature there exist a number of different admission policies such as the partitioning or threshold policies, which typically use individual thresholds for the different service classes. The presented adaptation scheme may be used to tune these threshold values in such a way that certain call loss probability targets are achieved in the system. If we consider two different service classes, where service classes 1 and 2 require $a_1$ and $a_2$ resource units ($a_1 > a_2$), service class 2 will only get access to the system if the total number of occupied channels is below an appropriate threshold T. This threshold can be controlled with the previously defined algorithms to obtain a certain loss probability for traffic class 1 or a certain ratio of the loss probabilities of traffic classes 1 and 2. Simulations have confirmed that this scheme is able to maintain the desired QoS levels.

Application to Queueing Systems

Application to Buffer Access in Packet Data (ATM/IP) Networks

The proposed scheme may be also applied to queueing instead of loss systems. Usually, queueing systems are used in packet data networks, where the packets from different communications arrive randomly at a switch/router. The packets are stored in a buffer until they can be transmitted on the corresponding outgoing line. In case of a network congestion the buffers will overflow and some packets will be lost. Since the services and applications have different sensitivity with respect to packet loss, different buffer access and transmission line scheduling policies have been developed to tailor the packet handling to the QoS requirements of the underlying services and applications. One scheme proposed in [3] divides the buffer into several parts, which can be accessed only by a part of the different traffic classes. We will explain this scheme considering the scenario in Figure 6, where a high and a low priority packet class is distinguished. The high priority class is able to access the whole buffer, whereas a packet with low priority can only access the buffer if less than T buffer places (bytes, ATM cells, packets) are already occupied. Hence, the packet loss probability of the high priority traffic is smaller due to a reservation of N - T buffer places. The threshold T will be adapted like in the guard channel scheme in response to packet arrivals of the high priority traffic class:

- The threshold will be raised by a value of $\Delta$, for each incoming high priority packet, which is able to access the system.
- On the other hand, the threshold will be lowered by a value of K $\Delta$, when a high priority packet is lost.

Again, since for each increase of the threshold (lost packet) there have to be K decreases of the threshold (packet admitted), the packet loss probability of the high priority packets will converge to a value of 1/K+1.

A modification of the scheme would be again to control the threshold in such a way that the ratio of the packet loss probabilities of class 1 and class 2 packets is kept at a constant value. This is done in the same way as described earlier for the guard channel scheme.

Furthermore, instead of controlling the loss of packets it may be also desired to control the loss of information in terms of no. of bytes. In that case, the adaptive threshold scheme has to take into account the packet size for the control of the threshold.

Application within the Random Early Detection Scheme for TCP/IP Networks

A very powerful and popular means of congestion handling in TCP/IP networks is the Random Early Detection scheme used in IP routers [4]. This scheme randomly discards packets when the average buffer size exceeds a certain lower buffer threshold. The dropping probability increases linearly with the average buffer size until a maximum threshold is reached, where the dropping probability corresponds to max_p. If the average queue size exceeds the maximum threshold, then every packet will be dropped. This random dropping of packets controls the traffic generated at the source if the communication is controlled by the Transmission Control Protocol (TCP). The basic scheme is illustrated in Figure 7.

The dimensioning of this scheme is not trivial, because it may suffer from the following problems [4]:

- Setting of the minimum threshold such that it is high enough to guarantee a certain throughput and to avoid underutilisation.
- Setting of the maximum threshold such that the difference between the maximum and the minimum value is large enough to avoid global synchronisation and to avoid an oscillation of the average queue length. In that case, the value max_th will be exceeded regularly.

The control of the minimum threshold value should be based on the system throughput, whereas the control of the maximum threshold should be based on the number of times when the maximum threshold is exceeded. Therefore, min_th will be increased for each packet that leaves an empty queue, whereas it will be decreased for each packet that leaves an occupied queue. On the other hand, the maximum threshold will be increased if the average queue size is larger than max_th whereas it will be decreased if the average queue size is smaller than max_th. Using appropriate control parameters it is possible to adapt the threshold values to achieve a large system throughput and to avoid global synchronisation.

Summary of Application Examples, Options and further Extensions:

- The following is a non-exhaustive list of possible applications of the proposed threshold scheme:

  1. Threshold adaptation of the guard channel scheme used for the prioritisation of handoff calls in mobile communication systems. The adaptation may be based on a target loss probability for handoff calls or on the ratio of lost handoff calls and lost new calls (ratio of dropping and blocking probability).
  2. Threshold adaptation for the call/connection/bearer admission policies used for multi-service networks such as ISDN, ATM, IP or UMTS networks. The adaptation may be based on target loss probabilities of certain service classes, ratio of the loss probabilities of different service classes, revenue of service classes, throughput and so on.
  3. Threshold adaptation of the buffer access schemes used in ATM or IP networks, which provide a service specific cell/packet loss probability. The adaptation may be performed based on cell/packet loss probabilities, delay quantiles, throughput and so on.
  4. Threshold adaptation of random early discard mechanisms used in IP routers. The adaptation of the thresholds used by the random early discard mechanism.
  5. Threshold adaptation of bandwidth allocation schemes of data services.

- The following QoS measures may be controlled by the proposed threshold scheme:

  1. Call/packet/information loss probability of a certain traffic class
  2. Ratio of call/packet/information loss probabilities of certain traffic classes
  3. Carried load/throughput of a certain traffic class
  4. Ratio of throughputs of certain traffic classes
  5. Delay quantile (number of packets which have a delay larger than a certain value) of a traffic class
  6. Ratio of delay quantiles of certain traffic classes
  7. Revenue obtained by different traffic classes

- Finally, a number of further extensions/modifications of the basic scheme are:

  1. Update of the threshold only if the difference between the old and the new threshold values exceeds a certain amount. This avoids too frequent updates of the threshold.
  2. Use of some filtering algorithms for the update of the threshold value (smoothing of the variations).
  3. Use of other more complex control algorithms, e.g., use of a proportional/integral/differential (PID) controller.
  4. Application of the scheme to more than two different traffic classes.

**Claims**

1. Method for granting access to resources of a communication network,
   wherein the communication network is designed to grant access to network resources when access to the network resources is requested for a first category of services,
   wherein the communication network is designed to grant access to network resources when access is requested for a second category of services, **characterized in that**
   a threshold value defining the ratio of network resources available for the first category of service and of resources available for the second category of service is set depending on
   a measured quality of service for at least one category of service and depending on
   a predetermined target quality of service for at least one category of services.

2. Method preferably according to claim 1,

for granting access to elements of a communication network,

which is a cellular mobile communication network or to an other wireless communication network,

wherein the communication network is able to grant access to network resources when access is requested by a mobile station for a change-over of a service from an element of a communication network to another element of a communication network,

wherein the communication network is able to grant access to network resources when access is requested by a mobile station for starting a new service,

wherein a threshold value defining the ratio of network resources available for hand-over of services and of resources available for starting new services

is set depending on a measured quality of service and depending on a predetermined target quality of service for new services and/or for services for which a hand-over is requested.

3. Method according to claim 1 or 2,

**characterised in that** a service comprises voice transmission or text transmission or video transmission or data transmission.

4. Method according to any of the preceding claims,

**characterised in that** if the measured quality of service of handovers is worse than a predetermined target quality of service of handovers, the threshold value is modified in a way that results in granting more resources to hand-over of services and granting less resources to new services.

5. Method according to claim 4,

**characterised in that** if the dropping rate, for hand-over of services exceeds a level represented by the predetermined target quality of service for hand-over of service, the threshold value is modified in a way that results in granting more resources to hand-over of services and granting less resources to new services.

6. Method according to any of the preceding claims,

**characterised in that** the available network resources comprise time- and/or frequency channels and/ or codes.

7. Method according to any of the preceding claims,

**characterised in that** it is used in the guard channel scheme of a cellular mobile network.

8. Method according to any of the preceding claims,

**characterised in that** the measured quality of service is measured by detecting the percentage of blocked hand-over- requests and/ or by detecting the percentage of blocked requests for a new service.

9. Method according to any of the preceding claims,

**characterised in that** the threshold value is modified only if the measured quality of service differs from the predetermined target quality of service by more than a preset amount or percentage.

10. Method according to any of the preceding claims,

**characterised in that** measuring the quality of service comprises filtering for smoothing before comparing it to the predetermined target quality of service.

11. Method according to any of the preceding claims,

**characterised in that** a PID- controller is used for determining the threshold value.

12. Method according to any of the preceding claims,

**characterised in that** it is used for more than one, preferably more than two traffic classes for services.

13. Method according to any of the preceding claims 1-6, 8-12, **characterised in that** the network is an ISDN network.

14. Method according to any of the preceding claims 1-6,

**characterised in that** the network is an ATM network.

15. Method according to any of the preceding claims 1-6,

**characterised in that** the network is an Internet Protocol network.

**16.** Method according to any of the preceding claims,
**characterised in that** the method is used for threshold adaption of a buffer access scheme of a network, especially for threshold adaption of buffer access scheme of an ATM or IP network, which provides a service specific cell or packet loss probability.

**17.** Method according to any of the preceding claims,
**characterised in that** the method is used for the adaption of a threshold of a random early discard mechanism, especially for a random early discard mechanism that can be used in an IP router.

**18.** Method according to any of the preceding claims,
**characterised in that** the network is a cellular mobile network,
especially a UMTS network.

**19.** Method according to any of the preceding claims,
**characterised in that** the measured quality of service is defined by at least the call or packet information loss probability of a certain traffic class.

**20.** Method according to any of the preceding claims,
**characterised in that** the measured quality of service is defined by at least the call or packet information loss probabilities of traffic classes.

**21.** Method according to any of the preceding claims,
**characterised in that** the measured quality of service is defined by the carried load or throughput of a certain traffic class.

**22.** Method according to any of the preceding claims,
**characterised in that** the measured quality of service is defined by at least throughputs of certain traffic classes.

**23.** Method according to any of the preceding claims,
**characterised in that** the measured quality of service is defined by at least the delay quantile of a traffic class or by the number of packets which have a delay larger than a certain value.

**24.** Method according to any of the preceding claims,
**characterised in that** the measured quality of service is defined by at least the ratio of delay quantiles of certain traffic classes.

**25.** Method according to any of the preceding claims,
**characterised in that** the measured quality of service is defined by at least the revenue obtained by certain traffic classes.

**26.** Method according to any of the preceding claims,
**characterised in that**, when access to network resources is requested for a first category of services, the communication network grants access to all network resources, and that, when access is requested for a second category of services, the communication network grants access to a part of the resources which part is defined by the threshold value.

**Patentansprüche**

**1.** Verfahren zur Gewährung des Zugriffs auf Ressourcen eines Kommunikationsnetzes,
wobei das Kommunikationsnetz so beschaffen ist, dass es einen Zugriff auf Netzressourcen gewährt, wenn ein Zugriff auf die Netzressourcen für eine erste Kategorie von Diensten angefordert wird,
wobei das Kommunikationsnetz so beschaffen ist, dass es einen Zugriff auf Netzressourcen gewährt, wenn ein Zugriff für eine zweite Kategorie von Diensten angefordert wird,
**dadurch gekennzeichnet, dass**
ein Schwellwert, der das Verhältnis von für die erste Kategorie von Diensten verfügbaren Netzressourcen zu für die zweite Kategorie von Diensten verfügbaren Ressourcen definiert, eingestellt wird in Abhängigkeit von einer gemessenen Dienstgüte für wenigstens eine Kategorie von Diensten und in Abhängigkeit von

einem vorgegebenen Zielwert der Dienstgüte für wenigstens eine Kategorie von Diensten.

2. Verfahren nach Anspruch 1,
zum Gewähren des Zugriffs auf Elemente eines Kommunikationsnetzes,
welches ein zellulares Mobilfunk-Kommunikationsnetz oder ein anderes drahtloses Kommunikationsnetz ist,
wobei das Kommunikationsnetz in der Lage ist, einen Zugriff auf Netzressourcen zu gewähren, wenn ein Zugriff von einer Mobilstation für eine Umschaltung eines Dienstes von einem Element eines Kommunikationsnetzes zu einem anderen Element eines Kommunikationsnetzes angefordert wird,
wobei das Kommunikationsnetz in der Lage ist, einen Zugriff auf Netzressourcen zu gewähren, wenn ein Zugriff von einer Mobilstation für das Starten eines neuen Dienstes angefordert wird,
wobei ein Schwellwert, der das Verhältnis der für ein Handover von Diensten verfügbaren Netzressourcen zu den für das Starten neuer Dienste verfügbaren Ressourcen definiert,
in Abhängigkeit von einer gemessenen Dienstgüte und in Abhängigkeit von einem vorgegebenen Zielwert der Dienstgüte für neue Dienste und/oder für Dienste, für welche ein Handover angefordert wird, eingestellt wird.

3. Verfahren nach Anspruch 1 oder 2,
**dadurch gekennzeichnet, dass** ein Dienst Sprachübertragung oder Textübertragung oder Videoübertragung oder Datenübertragung umfasst.

4. Verfahren nach einem der vorhergehenden Ansprüche,
**dadurch gekennzeichnet, dass**, falls die gemessene Dienstgüte von Handovers schlechter ist als ein vorgegebener Zielwert der Dienstgüte von Handovers, der Schwellwert auf eine Weise geändert wird, die zur Folge hat, dass mehr Ressourcen für das Handover von Diensten zur Verfügung gestellt werden und weniger Ressourcen für neue Dienste zur Verfügung gestellt werden.

5. Verfahren nach Anspruch 4,
**dadurch gekennzeichnet, dass**, falls die Abbruchrate (Verbindungsverlustrate) für das Handover von Diensten ein Niveau überschreitet, das durch den vorgegebenen Zielwert der Dienstgüte für das Handover von Diensten repräsentiert wird, der Schwellwert auf eine Weise geändert wird, die zur Folge hat, dass mehr Ressourcen für das Handover von Diensten zur Verfügung gestellt werden und weniger Ressourcen für neue Dienste zur Verfügung gestellt werden.

6. Verfahren nach einem der vorhergehenden Ansprüche,
**dadurch gekennzeichnet, dass** die verfügbaren Netzressourcen Zeitschlitze und/oder Frequenzkanäle und/oder Codes umfassen.

7. Verfahren nach einem der vorhergehenden Ansprüche,
**dadurch gekennzeichnet, dass** es im Rahmen des Schutzkanalverfahrens eines zellularen Mobilfunknetzes angewendet wird.

8. Verfahren nach einem der vorhergehenden Ansprüche,
**dadurch gekennzeichnet, dass** die gemessene Dienstgüte gemessen wird, indem der prozentuale Anteil der abgewiesenen Handover-Anforderungen erfasst wird und/oder indem der prozentuale Anteil der abgewiesenen Anforderungen für einen neuen Dienst erfasst wird.

9. Verfahren nach einem der vorhergehenden Ansprüche,
**dadurch gekennzeichnet, dass** der Schwellwert nur dann geändert wird, wenn sich die gemessene Dienstgüte um mehr als einen vorgegebenen Betrag oder Prozentsatz vom vorgegebenen Zielwert der Dienstgüte unterscheidet.

10. Verfahren nach einem der vorhergehenden Ansprüche,
**dadurch gekennzeichnet, dass** die Messung der Dienstgüte eine Filterung zwecks Glättung umfasst, bevor sie mit dem vorgegebenen Zielwert der Dienstgüte verglichen wird.

11. Verfahren nach einem der vorhergehenden Ansprüche,
**dadurch gekennzeichnet, dass** zur Bestimmung des Schwellwerts ein PID-Regler verwendet wird.

12. Verfahren nach einem der vorhergehenden Ansprüche,

**dadurch gekennzeichnet, dass** es für mehr als eine, vorzugsweise mehr als zwei Verkehrsklassen für Dienste verwendet wird.

13. Verfahren nach einem der vorhergehenden Ansprüche 1-6, 8-12, **dadurch gekennzeichnet, dass** das Netz ein ISDN-Netz ist.

14. Verfahren nach einem der vorhergehenden Ansprüche 1-6, **dadurch gekennzeichnet, dass** das Netz ein ATM-Netz ist.

15. Verfahren nach einem der vorhergehenden Ansprüche 1-6, **dadurch gekennzeichnet, dass** das Netz ein Internet-Protokoll-Netz ist.

16. Verfahren nach einem der vorhergehenden Ansprüche, **dadurch gekennzeichnet, dass** das Verfahren für die Schwellwertanpassung eines Pufferzugriffsverfahrens eines Netzes angewendet wird, insbesondere für die Schwellwertanpassung eines Pufferzugriffsverfahrens eines ATM- oder IP-Netzes, welches eine dienstespezifische Zellen- oder Paketverlustwahrscheinlichkeit liefert.

17. Verfahren nach einem der vorhergehenden Ansprüche, **dadurch gekennzeichnet, dass** das Verfahren für die Anpassung eines Schwellwerts eines Random Early Discard-Mechanismus angewendet wird, insbesondere für einen Random Early Discard-Mechanismus, der in einem IP-Router verwendet werden kann.

18. Verfahren nach einem der vorhergehenden Ansprüche, **dadurch gekennzeichnet, dass** das Netz ein zellulares Mobilfunknetz ist, insbesondere ein UMTS-Netz.

19. Verfahren nach einem der vorhergehenden Ansprüche, **dadurch gekennzeichnet, dass** die gemessene Dienstgüte durch wenigstens die Verbindungs- oder Paketinformations-Verlustwahrscheinlichkeit einer bestimmten Verkehrsklasse definiert ist.

20. Verfahren nach einem der vorhergehenden Ansprüche, **dadurch gekennzeichnet, dass** die gemessene Dienstgüte durch wenigstens die Verbindungs- oder Paketinformations-Verlustwahrscheinlichkeiten von Verkehrsklassen definiert ist.

21. Verfahren nach einem der vorhergehenden Ansprüche, **dadurch gekennzeichnet, dass** die gemessene Dienstgüte durch die angenommene Last oder den Durchsatz einer bestimmten Verkehrsklasse definiert ist.

22. Verfahren nach einem der vorhergehenden Ansprüche, **dadurch gekennzeichnet, dass** die gemessene Dienstgüte durch wenigstens Durchsätze bestimmter Verkehrsklassen definiert ist.

23. Verfahren nach einem der vorhergehenden Ansprüche, **dadurch gekennzeichnet, dass** die gemessene Dienstgüte durch wenigstens das Quantil der Laufzeit einer Verkehrsklasse oder durch die Anzahl der Pakete, welche eine Laufzeit haben, die größer als ein gewisser Wert ist, definiert ist.

24. Verfahren nach einem der vorhergehenden Ansprüche, **dadurch gekennzeichnet, dass** die gemessene Dienstgüte durch wenigstens das Verhältnis von Quantilen der Laufzeit bestimmter Verkehrsklassen definiert ist.

25. Verfahren nach einem der vorhergehenden Ansprüche, **dadurch gekennzeichnet, dass** die gemessene Dienstgüte durch wenigstens den Gebührenerlös definiert ist, der von bestimmten Verkehrsklassen erzielt wird.

26. Verfahren nach einem der vorhergehenden Ansprüche, **dadurch gekennzeichnet, dass**, wenn ein Zugriff auf Netzressourcen für eine erste Kategorie von Diensten angefordert wird, das Kommunikationsnetz den Zugriff auf alle Netzressourcen gewährt, und dass, wenn ein Zugriff für eine zweite Kategorie von Diensten angefordert wird, das Kommunikationsnetz den Zugriff auf einen Teil der Ressourcen gewährt, wobei dieser Teil durch den Schwellwert definiert ist.

**Revendications**

1. Procédé d'autorisation d'accès aux ressources d'un réseau de communication,

dans lequel le réseau de communication est conçu pour autoriser l'accès aux ressources de réseau lorsque l'accès aux ressources de réseau est demandé pour une première catégorie de services, dans lequel le réseau de communication est conçu pour autoriser l'accès aux ressources de réseau lorsque l'accès est demandé pour une deuxième catégorie de services, **caractérisé en ce que**

une valeur de seuil définissant le rapport des ressources de réseau disponibles pour la première catégorie de service et des ressources disponibles pour la deuxième catégorie de service est établie en fonction

d'une qualité de service mesurée pour au moins une catégorie de services et en fonction

d'une qualité de service cible prédéterminée pour au moins une catégorie de services.

2. Procédé selon la revendication 1,
pour autoriser l'accès à des éléments d'un réseau de communication,
qui est un réseau de communication mobile cellulaire ou un autre réseau de communication sans fil,
dans lequel le réseau de communication est capable d'autoriser l'accès aux ressources de réseau lorsque l'accès est demandé par une station mobile pour un transfert d'un service d'un élément d'un réseau de communication à un autre élément d'un réseau de communication,
dans lequel le réseau de communication est capable d'autoriser l'accès aux ressources de réseau lorsque l'accès est demandé par une station mobile pour démarrer un nouveau service,
dans lequel une valeur de seuil définissant le rapport des ressources de réseau disponibles pour le transfert des services et des ressources disponibles pour démarrer de nouveaux services dépend d'une qualité de service mesurée et dépend d'une qualité de service cible prédéterminée pour les nouveaux services et/ou pour les services pour lesquels un transfert est demandé.

3. Procédé selon la revendication 1 ou 2,
**caractérisé en ce qu'**un service comprend une transmission de conversation, une transmission de texte, une transmission vidéo ou une transmission de données.

4. Procédé selon l'une quelconque des revendications précédentes,
**caractérisé en ce que** si la qualité de service mesurée des transferts est pire qu'une qualité de service cible prédéterminée des transferts, la valeur de seuil sera modifiée d'une manière ayant pour conséquence l'attribution de plus de ressources au transfert de services et l'attribution de moins de ressources aux nouveaux services.

5. Procédé selon la revendication 4,
**caractérisé en ce que** si le taux d'abandon, pour le transfert de services, dépasse un niveau représenté par la qualité de service cible prédéterminée du transfert de service, la valeur de seuil sera modifiée d'une manière ayant pour conséquence d'attribution de plus de ressources au transfert de services et l'attribution de moins de ressources aux nouveaux services.

6. Procédé selon l'une quelconque des revendications précédentes,
**caractérisé en ce que** les ressources de réseau disponibles comprennent des voies temporelles et/ou de fréquences et/ou des codes.

7. Procédé selon l'une quelconque des revendications précédentes,
**caractérisé en ce qu'**il est utilisé dans la méthode à voie de garde d'un réseau mobile cellulaire.

8. Procédé selon l'une quelconque des revendications précédentes,
**caractérisé en ce que** la qualité de service mesurée est mesurée par la détection du pourcentage de demandes bloquées de transfert et/ou par la détection du pourcentage des demandes bloquées d'un nouveau service.

9. Procédé selon l'une quelconque des revendications précédentes,
**caractérisé en ce que** la valeur de seuil est modifiée seulement si la qualité de service mesurée diffère de la qualité de service cible prédéterminée d'une valeur supérieure à une quantité ou à un pourcentage préétabli(e).

10. Procédé selon l'une quelconque des revendications précédentes,
**caractérisé en ce que** la mesure de la qualité de service comprend le filtrage pour lissage avant sa comparaison avec la qualité de service cible prédéterminée.

11. Procédé selon l'une quelconque des revendications précédentes,
**caractérisé en ce qu'**un contrôleur PID est utilisé pour déterminer la valeur de seuil.

**12.** Procédé selon l'une quelconque des revendications précédentes,
**caractérisé en ce qu'**il est utilisé pour un nombre supérieur à un, de préférence supérieur à deux, de catégories de trafic pour les services.

**13.** Procédé selon l'une quelconque des revendications 1 à 6, 8 à 12 précédentes,
**caractérisé en ce que** le réseau est un réseau ISDN.

**14.** Procédé selon l'une quelconque des revendications 1 à 6 précédentes,
**caractérisé en ce que** le réseau est un réseau ATM.

**15.** Procédé selon l'une quelconque des revendications 1 à 6 précédentes,
**caractérisé en ce que** le réseau est un réseau Internet Protocole

**16.** Procédé selon l'une quelconque des revendications précédentes,
**caractérisé en ce que** le procédé est utilisé pour l'adaptation de seuil d'une méthode d'accès au tampon d'un réseau, particulièrement pour l'adaptation de seuil d'une méthode d'accès au tampon d'un réseau ATM ou IP, qui produit une probabilité de perte de cellules ou de paquets spécifique au service.

**17.** Procédé selon l'une quelconque des revendications précédentes,
**caractérisé en ce que** la méthode est utilisée pour l'adaptation d'un seuil d'un mécanisme d'abandon précoce aléatoire, particulièrement pour un mécanisme d'abandon précoce aléatoire pouvant être utilisé dans un routeur IP.

**18.** Procédé selon l'une quelconque des revendications précédentes,
**caractérisé en ce que** le réseau est un réseau mobile cellulaire, particulièrement un réseau UMTS.

**19.** Procédé selon l'une quelconque des revendications précédentes,
**caractérisé en ce que** la qualité de service mesurée est définie au moins par la probabilité de perte d'informations d'appel ou de paquet d'une certaine catégorie de trafic.

**20.** Procédé selon l'une quelconque des revendications précédentes,
**caractérisé en ce que** la qualité de service mesurée est définie au moins par les probabilités de perte d'informations d'appel ou de paquet des catégories de trafic.

**21.** Procédé selon l'une quelconque des revendications précédentes,
**caractérisé en ce que** la qualité de service mesurée est définie par la charge ou le débit transporté(e) d'une certaine catégorie de trafic.

**22.** Procédé selon l'une quelconque des revendications précédentes,
**caractérisé en ce que** la qualité de service mesurée est définie au moins par les débits de certaines catégories de trafic.

**23.** Procédé selon l'une quelconque des revendications précédentes,
dans lequel la qualité de service mesurée est définie au moins par le quantile de retard d'une catégorie de trafic ou par le nombre de paquets qui ont un retard supérieur à une certaine valeur.

**24.** Procédé selon l'une quelconque des revendications précédentes,
**caractérisé en ce que** la qualité de service mesurée est définie au moins par le rapport des quantiles de retard de certaines catégories de trafic.

**25.** Procédé selon l'une quelconque des revendications précédentes,
**caractérisé en ce que** la qualité de service mesurée est définie au moins par les recettes obtenues par certaines catégories de trafic.

**26.** Procédé selon l'une quelconque des revendications précédentes,
**caractérisé en ce que**, lorsque l'accès aux ressources de réseau est demandé pour une première catégorie de services, le réseau de communication autorise l'accès à toutes les ressources de réseau, et **en ce que**, lorsque l'accès est demandé pour une deuxième catégorie de services, le réseau de communication autorise l'accès à une partie des ressources, laquelle partie est définie par la valeur de seuil.

Event: Arrival/Departure of Call/Packet

Yes ← QoS of the event better than target QoS ? → No

New_Threshold = Old_Threshold - K$\Delta$

New_Threshold = Old_Threshold + $\Delta$

Figure 1: Flow diagram of the basic algorithm

Figure 2: Adaptive guard channel scheme

Figure 3: Loss probability of handoff calls

Figure 4: Loss probability of new call requests

Figure 5: Mean value of the adaptive threshold

Figure 7: Illustration of dropping probability of the Random Early Detection scheme

Figure 6: Application of the adaptive threshold scheme to a packet transmission buffer